Europäisches Patentamt

European Patent Office

Office européen des brevets

(19)

(11) **EP 1 054 842 B1**

(12) **FASCICULE DE BREVET EUROPEEN**

(45) Date de publication et mention
de la délivrance du brevet:
**04.12.2002 Bulletin 2002/49**

(51) Int Cl.7: **C03B 37/02**, C03B 37/03,
C03C 25/10

(21) Numéro de dépôt: **99902640.4**

(22) Date de dépôt: **11.02.1999**

(86) Numéro de dépôt international:
**PCT/FR99/00302**

(87) Numéro de publication internationale:
**WO 99/041208 (19.08.1999 Gazette 1999/33)**

(54) **PROCEDE ET DISPOSITIF DE FABRICATION D'UN FIL DE VERRE**

VERFAHREN UND VORRICHTUNG ZUM HERSTELLEN EINER GLASFASER

METHOD AND DEVICE FOR MAKING A GLASS YARN

(84) Etats contractants désignés:
**AT BE CH DE DK ES FI FR GB GR IE IT LI LU NL
PT SE**

(30) Priorité: **11.02.1998 FR 9801594**

(43) Date de publication de la demande:
**29.11.2000 Bulletin 2000/48**

(73) Titulaire: **Saint-Gobain Vetrotex France S.A.
73000 Chambéry (FR)**

(72) Inventeurs:
• **HUET, Eric
F-38500 Voiron (FR)**
• **RIVA, Massimo
I-20045 Besana Brianza (IT)**
• **RENAUDIN, Jean-Pierre
F-73160 Cognin (FR)**
• **DELEPLACE, Pierre
F-73170 Yenne (FR)**

(74) Mandataire: **Muller, René et al
SAINT-GOBAIN RECHERCHE,
39, quai Lucien Lefranc-BP 135
93303 Aubervilliers Cédex (FR)**

(56) Documents cités:
**FR-A- 2 164 444          US-A- 3 556 755
US-A- 3 573 014          US-A- 4 033 742
US-A- 4 049 415**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention est relative à un procédé de fabrication d'au moins un fil de verre, dans lequel on étire N filaments de verre à partir de N orifices débouchant de la face inférieure d'une même filière, les N orifices étant répartis en au moins deux groupes.

Un tel procédé est par exemple connu d'après le brevet américain US-A-4 033 742.

L'invention sera plus particulièrement décrite pour une application du procédé de fabrication de fils de verre coupés directement sous filière mais elle n'est pas pour autant limitée à une telle application.

Elle s'applique, en fait, plus généralement à tout procédé de fabrication de fils de verre continus destinés au renforcement de matières organiques et/ou inorganiques.

Dans le domaine de la fibre de verre dite de renforcement, la conjoncture économique a forcé les industriels à maintenir un objectif constant double, à savoir augmenter la productivité et réduire les coûts de production.

Un aspect de cet objectif est la recherche permanente d'obtention de la quantité maximale de fils de verre à partir d'une configuration de fibrage donnée, c'est-à-dire l'ensemble constitué d'une filière et de son équipement associé.

Du fait qu'une filière ne fonctionne pas isolément, en particulier dans les fours à fusion directe, il a été développé, selon l'objectif précité, de nouveaux types de dispositifs fonctionnant directement sous une ou plusieurs filières et collectant les fils de verre obtenus.

Parmi ces dispositifs, on peut citer ceux collectant les fils de verre sous la forme d'enroulements comme montré dans le document US-A- 4 033 742, ceux les collectant sur des supports récepteurs en translation ou encore ceux les coupant avant de les collecter à l'aide d'un organe servant également à les étirer.

Ces dispositifs ont en outre non seulement augmenté la quantité de fils de verre produite à partir d'une filière donnée mais ils ont également supprimé une étape complète de fabrication.

Selon le développement mentionné ci-dessus, la conception de nouvelles filières à tirée augmentée a été déterminante.

Ainsi, il a été conçu des filières avec un nombre d'orifices accru. En particulier, il n'est pas rare aujourd'hui d'avoir, en fonctionnement sur des installations industrielles, des filières de plus de 4000 orifices...

Avec la conception de ces nouvelles filières à nombre d'orifices accru, sont apparues des casses de l'ensemble des filaments de verre étirés de plus en plus fréquentes, du fait notamment des inhomogénéités du verre en fond de filière.

Ces casses engendrent bien évidemment une interruption involontaire de l'étirage et donc des pertes de productivité.

Un souci permanent a alors été de maîtriser ces casses. Pour ce faire, on a cherché à identifier les causes de ces casses.

On a pu ainsi établir, de manière non limitative, une classification de ces causes en deux catégories, à savoir :

- d'une part, une contrainte mécanique exercée trop élevée ;
- d'autre part, la présence de défauts liés par exemple à la qualité imparfaite du verre en fusion (inclusions, bulles...).

Beaucoup d'améliorations ont alors été apportées pour supprimer ces causes.

En d'autres termes, jusqu'à aujourd'hui, on s'est toujours attaché à dégager les paramètres physiques à l'origine des casses, dans le but de maîtriser ces dernières.

De ce fait, on ne s'est guère intéressé à la propagation de casses à l'ensemble des filaments de verre étirés à partir de la même filière.

En effet, une casse ne se produit jamais instantanément sur l'ensemble des filaments de verre. Elle se produit sur un ou plusieurs filaments dont l'(les) extrémité(s) libre(s) résultante(s) vient(nent) à son(leur) tour en contact avec les filaments environnants, ce qui provoque la casse de ces derniers jusqu'à ce que l'ensemble des filaments soit affecté.

L'invention se donne alors pour but de maîtriser les casses de l'ensemble des filaments de verre étirés à partir d'une même filière, en évitant, à tout le moins en limitant, la(les) propagation(s) d'une ou plusieurs casses d'un ou plusieurs filaments audit ensemble.

Ce but est atteint selon l'invention par un procédé de fabrication d'au moins un fil de verre, dans lequel on étire N filaments de verre à partir de N orifices débouchant de la face inférieure d'une même filière, les N orifices étant répartis en au moins deux groupes caractérisé en ce qu'on établit une séparation permanente entre les nappes de filaments issues de chacun desdits groupes.

La solution selon l'invention répond parfaitement au problème posé. En effet, elle permet désormais d'envisager des casses localisées, dans la mesure où seule une partie de l'ensemble des filaments de verre étirés à partir de la même filière subit des casses.

Selon une variante préférée du procédé selon l'invention, la séparation est établie au moyen d'un écran sensiblement perpendiculaire à la face inférieure de ladite filière.

Une telle variante a ceci d'extrêmement avantageux qu'elle est parfaitement adaptée aux types de filières selon l'état de l'art, sans que l'aéraulique de celles-ci n'ait à subir de modifications substantielles. Autrement dit, les moyens mis en oeuvre pour maîtriser les courants d'air induits par les filaments étirés, en particulier ceux à proximité immédiate de la filière, n'ont pas à être modifiés.

De préférence, le nombre N est égal à au moins 800 et chaque nappe de filaments séparée comprend au moins 400 filaments.

L'invention vise également un dispositif pour la mise en oeuvre du procédé précédemment défini. Ce dispositif est remarquable en ce qu'il comporte :

- au moins une filière dont la face inférieure est munie de N orifices répartis en au moins deux groupes,
- des moyens pour établir une séparation permanente entre les nappes de filaments issues de chacun desdits groupes.

Avantageusement, le dispositif décrit ci-dessus comporte un dispositif enducteur, de préférence comportant un rouleau unique, alimenté en apprêt ou ensimage.

Au contact de ce dispositif enducteur, les nappes de filaments se recouvrent en apprêt ou ensimage.

Selon une caractéristique de l'invention, le dispositif enducteur comporte au moins deux capots mobiles l'un par rapport à l'autre, avantageusement autour d'un axe sensiblement parallèle à l'axe du dispositif enducteur, et recouvrant en position rabattue au moins en partie ledit dispositif enducteur.

Ces capots procurent un avantage indéniable.

En effet, lors d'une opération de relance d'une nappe de filaments préalablement cassés, rabattre un capot revient à s'affranchir de tout risque de contact de celle-ci avec le dispositif enducteur. Or, un tel contact aurait pour conséquence néfaste de venir perturber la nappe de filaments située immédiatement à proximité et pourrait, le cas échéant, engendrer sa casse.

De préférence, la partie inférieure d'au moins un desdits capots comporte au moins un bord oblique par rapport à l'axe du dispositif enducteur. Cette forme particulière permet d'écarter une nappe de filaments à relancer d'une autre située immédiatement à proximité.

Plusieurs modes de réalisation, pris seuls ou combinés entre eux, peuvent être alors envisagés pour établir la séparation des nappes.

Selon un premier mode de réalisation, la séparation permanente est réalisée au moyen d'au moins un soufflage d'air.

Selon un deuxième mode de réalisation, la séparation permanente est réalisée au moyen d'au moins un écoulement d'eau.

Selon ces deux premiers modes de réalisation, le moyen de soufflage d'air et/ou le moyen d'écoulement d'eau comporte(nt) avantageusement au moins une fente par laquelle un rideau d'air et/ou d'eau continu(s) s'écoule(nt) selon une direction sensiblement perpendiculaire à la face inférieure de la filière.

De préférence, la fente est située à proximité de la face inférieure de la filière.

Selon un troisième mode de réalisation préféré du dispositif selon l'invention, la séparation permanente est réalisée au moyen d'au moins un écran sensiblement perpendiculaire à la face inférieure de la filière. Selon une caractéristique avantageuse, l'écran comprend au moins une paroi.

Une telle configuration est en outre simple et peu onéreuse.

Cette paroi peut être fixée, de préférence par vissage, à un support d'accrochage situé à proximité de la face inférieure de la filière.

Le support d'accrochage peut être réglable en hauteur, de telle sorte que la distance le séparant de la face inférieure de la filière est comprise entre 0 et 20 mm.

Selon une caractéristique avantageuse de la paroi, celle-ci comporte un système de refroidissement de préférence à eau, qui, en cas de besoin, vient compléter le rôle des ailettes de refroidissement disposées entre les rangées d'orifices, notamment celles situées immédiatement à proximité de la paroi.

Pour des commodités de montage et de démontage, il est préférable que la paroi comporte au moins deux plaques fixées entre elles l'une dans le prolongement de l'autre, en particulier lorsqu'il s'avère judicieux d'avoir une longueur de paroi importante.

Ainsi, la paroi peut se prolonger au moins jusqu'au dispositif enducteur. On s'assure de cette façon d'une séparation physique entre les nappes de filaments sur la majeure partie de leur hauteur pour éviter la propagation des casses d'une nappe à l'autre au niveau du système ensimeur, par enroulement des filaments sur le rouleau ensimeur.

D'une manière particulièrement préférée, au moins une des faces de la paroi comporte un moyen pour éviter l'adhérence d'un ou plusieurs filaments de verre à ladite face. Un tel collage peut se révéler préjudiciable. En effet, lorsqu'une casse se produit, le débit des filaments de verre au travers du groupe de la filière concerné par cette casse est diminué puisque la seule force d'entraînement restante est la pesanteur.

En cas de collage d'un ou plusieurs filaments de verre à la paroi selon l'invention, le verre ne s'écoule plus librement verticalement mais a tendance à se répartir horizontalement entre les tétons (enverrages) et/ou à former des mariages entre les gouttes de verre issues des orifices voisins, rendant ainsi la relance plus difficile et plus longue.

Pour réaliser ce moyen anti-adhésif, plusieurs variantes, prises seules ou en combinaison, peuvent être envisagées.

Tout d'abord, la face de la paroi précitée peut être munie d'un revêtement anti-adhésif, avantageusement en polytétrafluoréthylène PTFE. Cette matière a en outre l'avantage d'être très durable et peu coûteuse.

Il peut être également prévu qu'un jet d'eau et/ou d'air s'écoule substantiellement le long de la face.

Le jet d'air a l'avantage, entre autre, de pouvoir faciliter le décollage de la paroi d'un ou plusieurs filaments cassés dans le cas de figure où il(s) parviendrait(ent) malgré tout à s'y coller.

Lorsque l'écoulement est laminaire, le jet a également l'avantage de pouvoir, le cas échéant compenser le manque d'air induit par la casse d'une nappe de filaments étirés.

L'invention qui vient d'être décrite est particulièrement applicable aux installations de fabrication de fils coupés directement sous filière. En effet, la mise en oeuvre de l'invention ne nécessite ni de modification particulière de l'organe d'étirage existant, ni d'arrêt de celui-ci lors d'une relance d'une nappe de filaments.

L'invention trouve application dans la fabrication de fils de verre continus destinés au renforcement de matières organiques et/ou inorganiques, notamment ceux de diamètre filamentaire compris entre 5 et 24 µm.

D'autres détails et caractéristiques avantageuses de l'invention ressortiront ci-après de la description d'un exemple de réalisation détaillé, non limitatif, faite en référence aux figures qui représentent

- **Figures 1 et 2** : une vue de face et une vue de coupe d'un dispositif conforme à l'invention ;
- **Figures 3 et 4** : une vue de face et une vue de coupe selon l'axe A-A d'une première variante d'une partie du dispositif selon les figures 1 et 2 ;
- **Figure 4a:** une vue partielle agrandie de la figure 4 ;
- **Figures 5 et 6** : une vue de face et une vue de coupe selon l'axe A-A d'une deuxième variante d'une partie du dispositif selon les figures 1 et 2
- **Figure 6a:** une vue partielle agrandie de la figure 6 ;
- **Figures 7 et 8:** une vue de face du dispositif selon la figure 1, à deux moments différents de son fonctionnement ;

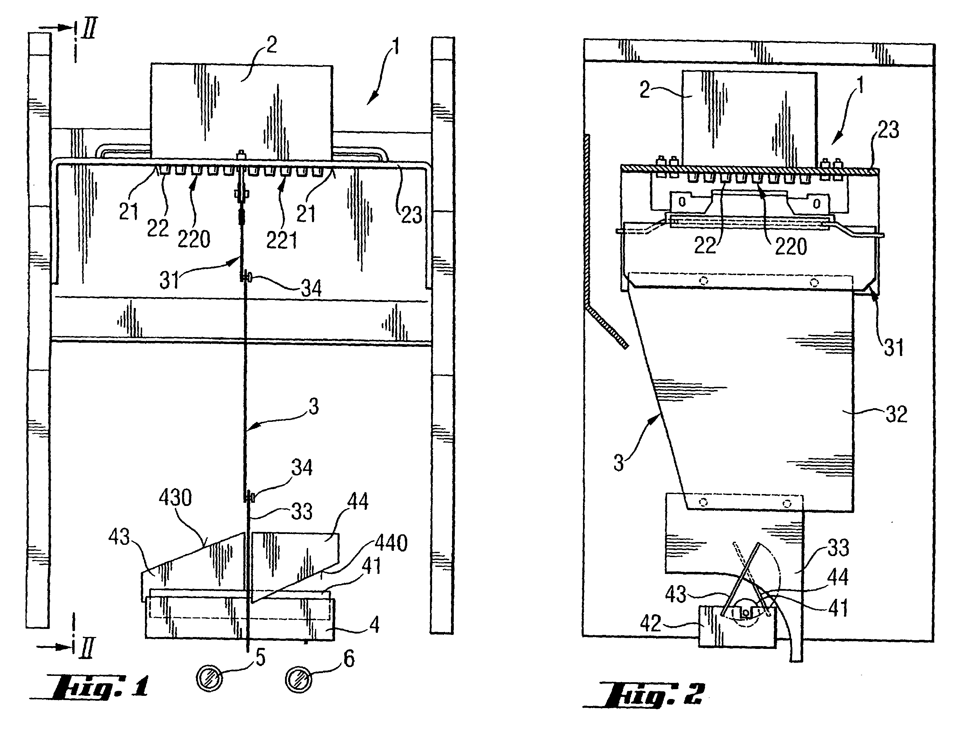

Le dispositif 1 conforme à l'invention, représenté sur les figures 1 et 2 est implanté dans une installation de fabrication de fils de verre coupés directement sous filière.

Cette installation comprend en outre une machine de coupe de fils de verre située en aval, ladite machine comportant elle-même un organe d'étirage.

Cet organe d'étirage a pour rôle d'étirer mécaniquement les fils de verre continus obtenus à partir des filières de l'installation et renvoyés sur ledit organe au moyen de roulettes dites de renvoi 5,6.

Le dispositif 1 conforme à l'invention va maintenant être décrit en référence aux figures 1 et 2.

Ce dispositif se compose essentiellement d'une filière 2, d'une paroi 3 et d'un dispositif ensimeur 4.

La face inférieure 21 de la filière 2 est munie de 4000 orifices 22, sous la forme de tétons, répartis en deux groupes égaux 220, 221.

Sur les périphériques de cette même filière 2 est fixée par vissage-boulonnage un support d'accrochage 23 situé dans le plan médian de ladite face 21.

Ce support d'accrochage 23 maintient également par vissage-boulonnage la paroi 3 sensiblement perpendiculaire à la face inférieure 21 de la filière 2.

Cette paroi 3 se compose essentiellement de trois plaques 31, 32, 33 d'épaisseur sensiblement égale et situées dans le prolongement l'une de l'autre.

Ces plaques 31, 32, 33 sont en outre accrochées au moyen de crochets 34, ce qui permet un démontage rapide et aisé.

La plaque inférieure 33 s'étend jusqu'à la partie inférieure du dispositif ensimeur 4.

Il est à noter que toutes les faces des trois plaques précitées, ainsi que les capots 43, 44 sont recouverts d'un revêtement anti-adhésif en polytétrafluoréthylène PTFE du type Téflon®.

Le dispositif ensimeur 4, quant à lui, comporte un rouleau ensimeur 41 alimenté en ensimage par un bac 42. La composition de l'ensimage est connue en soi et elle permet, en outre, d'avoir les fonctions habituelles, à savoir protéger des fils de verre contre l'abrasion, éviter la casse pendant leur fabrication et leur utilisation, permettre l'association des fils de verre obtenus avec les matières organiques et/ou inorganiques destinées à être renforcées par ces mêmes fils ou encore assurer l'intégrité des fils.

Ce dispositif ensimeur 4 comporte également deux capots 43, 44 situés symétriquement par rapport à la

EP 1 054 842 B1

plaque 33.

Ces capots sont mobiles l'un par rapport à l'autre selon un axe parallèle à celui du rouleau ensimeur 41, axe qui dans ce cas de figure, est perpendiculaire à la plaque 33 précitée. En outre, en position rabattue, ils viennent recouvrir le rouleau ensimeur 41, comme cela est représenté sur la figure 2.

Chacun de ces capots présente dans sa partie inférieure une forme biseautée 430,440 Cette forme particulière permet à une nappe de filaments de verre issue de l'un des deux groupes 220,221 d'être écartée de la paroi 3, lors d'une opération de relance et pendant la chute gravitaire des gouttes de verre, tel qu'il le sera expliqué ci-après.

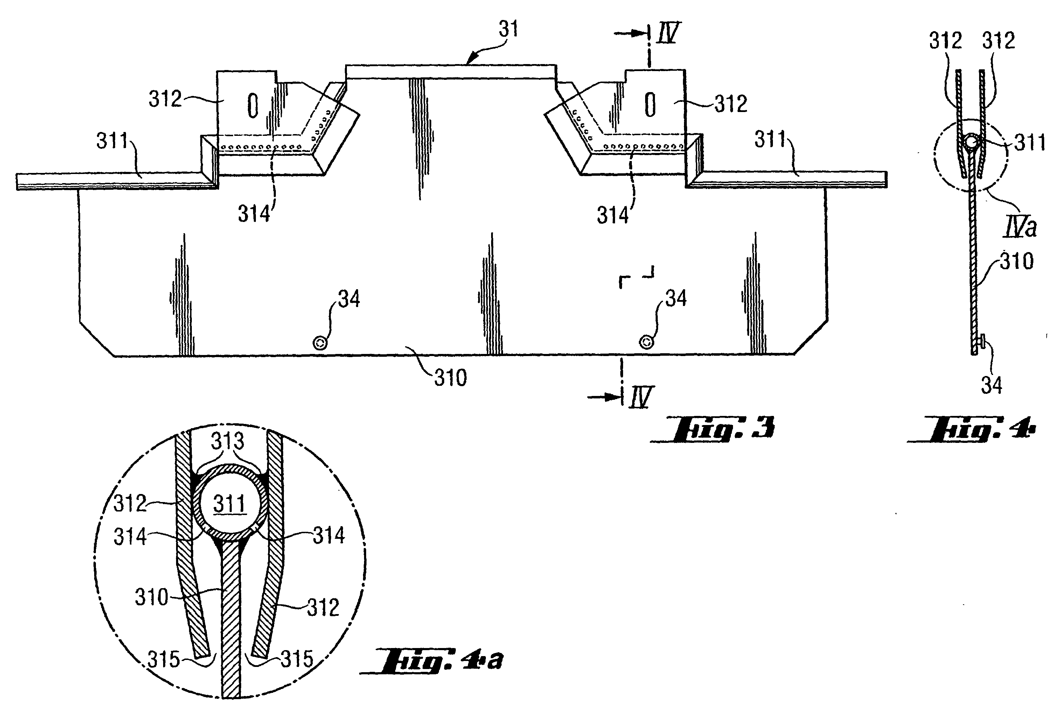

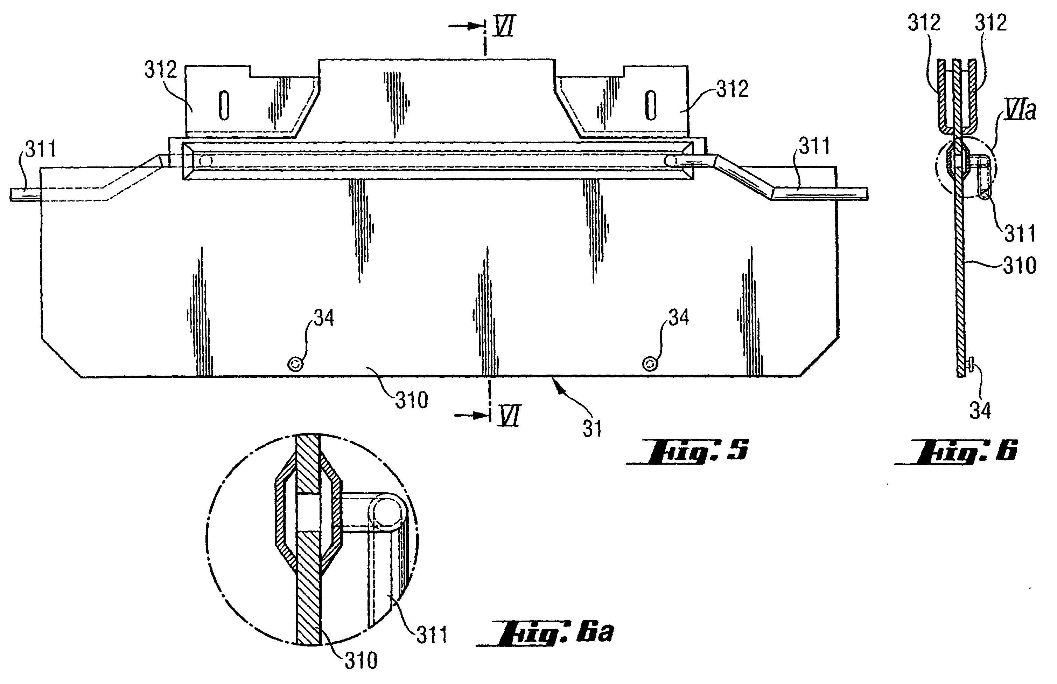

Sur les figures 3 et 4, on a représenté respectivement en vue de face et en vue de coupe une première configuration de la plaque supérieure 31 de la paroi 3.

Cette plaque supérieure 31 comprend essentiellement une tôle principale 310. Le long de la partie supérieure de cette tôle principale 310 est soudé un tube 311 sur lequel sont rapportées quatre plaques d'obturation 312 servant, entre autres, à accrocher la plaque 31 au support d'accrochage 23 précité. La manière dont ces tôles d'obturation sont rapportées est illustrée à la figure 4a.

Sur cette figure, on voit que deux lignes de soudure 313 étanches et continues sur toute la longueur des plaques 312 permettent la solidarisation de ces dernières au tube 311.

Ce tube 311 est percé de trous circulaires 314 uniformément répartis sur toute la longueur des plaques 312. Lors du fonctionnement du dispositif 1 selon l'invention, de l'air circule dans ce tube 311 avec un débit tel que:

- d'une part, ce dernier vient compléter le rôle habituel des ailettes des refroidisseurs de la face inférieure 21 de la filière 2, non représentées, situées de part et d'autre de la paroi,
- d'autre part, un jet d'air à écoulement laminaire s'écoule le long de la paroi, à travers chaque fente 315 délimitée par la paroi et une plaque d'obturation 312.

Ce jet d'air peut par exemple compenser le manque d'air induit par la casse d'une nappe de filaments étirés.

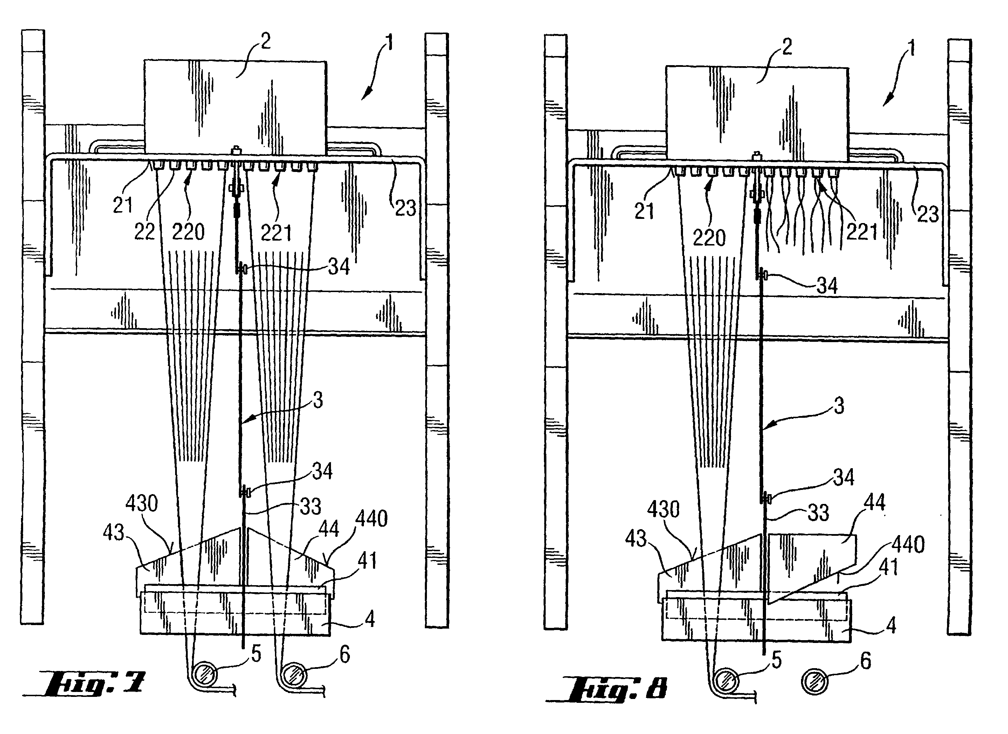

Sur les figures 5 et 6, on a représenté respectivement en vue de face et en vue de coupe une deuxième configuration de la plaque supérieure 31 de la paroi 3.

On retrouve ici les mêmes éléments décrits précédemment en référence aux figures 3 et 4, à ceci près que:

- les plaques d'obturation 312 sont au nombre de deux et qu'elles sont soudées directement à la tôle principale 310;
- le tube 311 est étanche. En outre, il est possible de faire circuler à travers ce tube un fluide, tel que de l'eau, à un débit plus important que précédemment dans le but par exemple d'augmenter son pouvoir caloriporteur, ce qui est nécessaire dans certaines configurations de filière.

Le fonctionnement du dispositif qui vient d'être décrit va maintenant être expliqué en référence aux figures 7 et 8.

On précise ici que le diamètre des filaments de verre individuels obtenus selon ce dispositif est compris entre 9 et 17 µm, et de préférence entre 9 et 11 µm.

Sur la figure 7, on voit deux nappes de 2000 filaments de verre issues respectivement des groupes 220,221 de la filière 2. Ces nappes, une fois les filaments de verre ensimés au contact du rouleau ensimeur 41, forment chacune un fil de verre renvoyé sur un organe d'étirage, non représenté, à l'aide de roulettes de renvoi 5,6.

Sur la figure 8, une seule nappe de 2000 filaments de verre issue du groupe 220 précité forme un fil de verre unique. De l'autre groupe 221, s'écoulent des gouttes de verre qui commencent à former autant de filaments que le groupe 221 comporte d'orifices. Auparavant, une casse d'un ou plusieurs filament(s) de verre issu(s) d'un ou plusieurs orifice(s) s'est produite puis s'est propagée à l'ensemble des filaments de verre issus de ce même groupe 221.

La paroi 3, quant à elle, a parfaitement joué son rôle puisque la casse est restée localisée et ne s'est pas propagée à la nappe de filaments de verre issue du groupe 220.

Bien évidemment, il peut se produire le même phénomène avec la casse localisée du côté du groupe 220.

Pour ce qui est de l'opération de relance, l'opérateur réalise successivement les étapes suivantes:

- il abaisse le capot 44 jusqu'à ce que les filaments de verre soient reformés ;
- il active l'air de relance sur la partie de filière à l'arrêt ;
- il vient regrouper lesdits filaments sous la forme d'une autre nappe immédiatement après avoir relevé le capot précité ;
- il étire manuellement cette dernière jusqu'à la roulette de renvoi 6 puis jusqu'à l'organe d'étirage qui prend alors le relais et amène les filaments au diamètre nominal.

Outre le fait que le dispositif selon l'invention évite la propagation d'une ou plusieurs casses d'un ou plusieurs filaments de verre issu d'un même groupe à ceux de l'autre groupe, il rend l'opération de relance qui vient d'être décrite beaucoup plus rapide et efficace qu'une opération de relance selon l'état de l'art.

En effet, l'intervention de l'opérateur est plus rapide car le nombre de filaments de verre qu'il a à tenir dans sa main est bien moindre (deux fois moins dans l'exemple). De plus, le temps mis pour effectuer complètement la relance est également diminué.

Les mesures qui ont été réalisées et les calculs qui en découlent relatives au cas d'une séparation en deux nappes, viennent corroborer ces propos.

Sur une période de fonctionnement T égale à 24 heures, on a relevé, pour le dispositif selon l'invention dont la filière a une tirée spécifique S théorique égale à 2 tonnes pour cette même période, le nombre total C de casses qui se sont produites.

On a également relevé parmi ce nombre total C de casses le pourcentage c de casses qui se sont propagées à l'ensemble des filaments de verre issus de la filière, ci-après dénommées casses totales, et le pourcentage c' de casses qui sont restées localisées au niveau d'une seule nappe de filaments issus d'un seul des deux groupes, ci-après dénommées casses localisées.

On a déterminé le temps moyen t,t' mis pour effectuer complètement la relance à partir d'une casse respectivement totale et localisée. On précise ici que le temps moyen t,t' est la durée entre le moment où apparaît une casse et le moment où les filaments de verre qui ont subi cette casse, qu'elle soit localisée ou totale, sont à nouveau étirés mécaniquement par l'organe d'étirage.

A partir de ces valeurs mesurées, on a calculé le rendement de fibrage $\eta$ et de la quantité de matière réellement produite Q sur une période T à l'aide de la formule suivante :

$$\eta = \frac{T - C(c.t + \frac{1}{2} c'.t')}{T}$$

L'ensemble des valeurs qui viennent d'être définies sont regroupées dans le tableau ci-dessous.

Ce tableau regroupe également les valeurs relatives à un exemple comparatif selon l'état de l'art, c'est-à -dire une filière sans séparation. Les mesures ont été effectuées de manière identique à l'exemple selon l'invention. Bien évidemment, pour cet exemple comparatif, le nombre c' est nul et le nombre c est égal à l'unité. Enfin, comme la relance par moitié de filière déstabilise moins le processus de fibrage, il y a moins de casses en comparaison du dispositif selon l'état de l'art.

TABLEAU

|  | Exemple selon l'invention | Exemple comparatif |
|---|---|---|
| Nombre de casses C | 30 | 35 |
| pourcentage casses totales c (%) | 20 | 100 |
| temps moyen t (min) | 5 | 5 |
| pourcentage casses localisées c' (%) | 80 | - |
| temps moyen t' (min) | 3 | - |
| rendement temps de fibrage $\eta$(%) | 95,4 | 87,8 |
| Quantité matière réellement produite Q (tonnes) | 1,908 | 1,756 |

De ce tableau, il ressort clairement que le dispositif selon l'invention permet d'atteindre des rendements bien plus élevés que ceux atteints par des filières selon l'état de l'art.

En conclusion, le dispositif selon l'invention de conception très simple permet, par la maîtrise de la (des) propagation(s) de casse(s) susceptible(s) de se produire sur un ou plusieurs filaments de verre étirés à partir d'une filière, d'augmenter notablement les seuils de productivité d'une installation de fibrage.

Bien entendu, diverses modifications peuvent être apportées par l'homme de l'art sans pour autant sortir du cadre de l'invention dans la mesure où la séparation permanente, telle que mentionnée précédemment, est toujours établie.

**Revendications**

1. Procédé de fabrication d'au moins un fil de verre, dans lequel on étire N filaments de verre à partir de N orifices débouchant de la face inférieure (21) d'une même filière, les N orifices étant répartis en au moins deux groupes (220, 221) **caractérisé en ce qu'**on établit une séparation permanente entre les nappes de filaments issues de chacun desdits groupes (220, 221).

2. Procédé selon la revendication 1, **caractérisé en ce que** ladite séparation est établie au moyen d'un écran sensiblement perpendiculaire à la face inférieure (21) de la filière.

3. Procédé selon la revendication 1 ou 2, **caractérisé en ce que** le nombre N est égal à au moins 800, et **en ce que** chaque nappe de filaments séparée comprend au moins 400 filaments.

4. Dispositif pour la mise en oeuvre du procédé selon l'une quelconque des revendications 1 à 3, comprenant une filière avec N orifices débouchant de la face inférieure (21) de cette filière, les N orifices étant répartis en au moins deux groupes (220, 221), **caractérisé en ce qu'**il comporte des moyens pour établir une séparation permanente entre les nappes de filaments issues de chacun desdits groupes (220, 221).

5. Dispositif selon la revendication 4, **caractérisé en ce qu'**il comporte un dispositif enducteur (4), de préférence comportant un rouleau unique, alimenté en apprêt ou ensimage.

6. Dispositif selon la revendication 5, **caractérisé en ce qu'**il comporte au moins deux capots (43, 44) mobiles l'un par rapport à l'autre, avantageusement autour d'un axe sensiblement parallèle à l'axe du dispositif enducteur (4), et recouvrant en position rabattue au moins en partie ledit dispositif enducteur.

7. Dispositif selon la revendication 6, **caractérisé en ce que** la partie inférieure d'au moins un desdits capots (43, 44) comporte au moins un bord oblique (430, 440) par rapport à l'axe dudit dispositif enducteur.

8. Dispositif selon l'une des revendications 4 à 7, **caractérisé en ce que** les moyens pour établir la séparation permanente comprennent au moins un moyen de soufflage d'air et/ou un moyen d'écoulement d'eau.

9. Dispositif selon la revendication 8, **caractérisé en ce que** le moyen de soufflage d'air et/ou le moyen d'écoulement d'eau comporte(nt) au moins une fente (315) par laquelle un rideau d'air et/ou d'eau continu(s) s'écoule(nt) selon une direction sensiblement perpendiculaire à la face inférieure (21) de la filière.

10. Dispositif selon la revendication 9, **caractérisé en ce que** ladite fente (315) est située à proximité de la face inférieure (21) de la filière.

11. Dispositif selon l'une des revendications 4 à 10, **caractérisé en ce que** les moyens pour établir la séparation permanente comprennent au moins un écran sensiblement perpendiculaire à la face inférieure de la filière.

12. Dispositif selon la revendication 11, **caractérisé en ce que** ledit écran comprend au moins une paroi (3).

13. Dispositif selon la revendication 12, **caractérisé en ce que** ladite paroi (3) est fixée, de préférence par vissage, à un support d'accrochage (23) situé à proximité de la face inférieure de la filière.

14. Dispositif selon la revendication 13, **caractérisé en ce que** la distance séparant le support d'accrochage (23) de la face inférieure (21) de la filière est comprise entre 0 et 20 mm.

15. Dispositif selon l'une des revendications 12 à 14, **caractérisé en ce que** ladite paroi (3) comporte au moins un système de refroidissement, de préférence à eau.

16. Dispositif selon l'une des revendications 12 à 15, **caractérisé en ce que** ladite paroi (3) comporte au moins deux plaques (31, 32) fixées entre elles, l'une dans le prolongement de l'autre.

17. Dispositif selon l'une des revendications 12 à 16, **caractérisé en ce que** ladite paroi (3) se prolonge au moins jusqu'au dispositif enducteur (4).

**18.** Dispositif selon l'une des revendications 12 à 17, **caractérisé en ce qu'** au moins une des faces de ladite paroi comporte un moyen pour éviter l'adhérence d'un ou plusieurs filaments de verre avec ladite face.

**19.** Dispositif selon la revendication 18, **caractérisé en ce que** ladite face est recouverte d'un revêtement anti-adhésif, avantageusement en polytétrafluoréthylène PTFE.

**20.** Dispositif selon la revendication 18 ou 19, **caractérisé en ce que** un jet d'eau et/ou d'air s'écoule substantiellement le long de ladite face.

**21.** Utilisation d'au moins un dispositif selon l'une quelconque des revendications 4 à 20 avec une installation de coupe directe sous filière.

**22.** Application du procédé selon l'une des revendications 1 à 3, ou du dispositif selon l'une des revendications 4 à 20 à la fabrication de fils de verre continus destinés au renforcement de matières organiques et/ou inorganiques, notamment ceux de diamètre filamentaire compris entre 5 et 24 μm.


**Patentansprüche**

**1.** Verfahren zur Herstellung wenigstens eines Glasfadens, in welchem N Glasfilamente aus N in die Unterseite (21) ein und derselben Spinndüse mündenden Öffnungen gezogen werden, die in mindestens zwei Gruppen (220, 221) unterteilt sind, **dadurch gekennzeichnet, dass** zwischen den einzelnen Filamentbahnen, die von den Gruppen (220, 221) kommen, eine ständige Trennung aufgebaut wird.

**2.** Verfahren nach Anspruch 1, **dadurch gekennzeichnet, dass** die Trennung mittels einer Trennwand aufgebaut wird, die zur Unterseite (21) der Spinndüse im Wesentlichen senkrecht steht.

**3.** Verfahren nach Anspruch 1 oder 2, **dadurch gekennzeichnet, dass** die Anzahl N mindestens 800 beträgt, **und dass** eine getrennte Filamentbahn mindestens 400 Filamente umfasst.

**4.** Vorrichtung zur Durchführung des Verfahrens nach einem der Ansprüche 1 bis 3, die eine Spinndüse mit N in ihre Unterseite (21) mündenden Öffnungen enthält, die in mindestens zwei Gruppen (220, 221) unterteilt sind, **dadurch gekennzeichnet, dass** sie Mittel zum Aufbau einer ständigen Trennung zwischen den von den Gruppen (220, 221) kommenden Filamentbahnen umfasst.

**5.** Vorrichtung nach Anspruch 4, **dadurch gekennzeichnet, dass** sie eine vorzugsweise eine einzige Walze umfassende Auftragseinrichtung (4) enthält, der ein Schmälz- oder Schlichtemittel zugeführt wird.

**6.** Vorrichtung nach Anspruch 5, **dadurch gekennzeichnet, dass** sie mindestens zwei Abdeckungen (43, 44) umfasst, die, vorteilhafterweise um eine zur Achse der Auftragseinrichtung (4) im Wesentlichen parallele Achse, in Bezug aufeinander beweglich sind und in umgeklappter Position diese Auftragseinrichtung wenigstens teilweise bedecken.

**7.** Vorrichtung nach Anspruch 6, **dadurch gekennzeichnet, dass** der untere Teil wenigstens einer der Abdeckungen (43, 44) mindestens einen in Bezug auf die Achse der Auftragseinrichtung schrägen Rand (430, 440) umfasst.

**8.** Vorrichtung nach einem der Ansprüche 4 bis 7, **dadurch gekennzeichnet, dass** die Mittel zum Aufbau der ständigen Trennung mindestens ein Mittel zum Einblasen von Luft und/oder ein Mittel zum Fließenlassen von Wasser umfassen.

**9.** Vorrichtung nach Anspruch 8, **dadurch gekennzeichnet, dass** das Mittel zum Einblasen von Luft und/oder das Mittel zum Fließenlassen von Wasser mindestens einen Schlitz (315) umfasst/umfassen, durch welchen ein kontinuierlicher Luftund/oder Wasserschleier in einer zur Unterseite (21) der Spinndüse im Wesentlichen senkrechten Richtung strömt/strömen.

**10.** Vorrichtung nach Anspruch 9, **dadurch gekennzeichnet, dass** sich der Schlitz (315) in der Nähe der Unterseite (21) der Spinndüse befindet.

**11.** Vorrichtung nach einem der Ansprüche 4 bis 10, **dadurch gekennzeichnet, dass** die Mittel zum Aufbau der ständigen Trennung mindestens eine zur Unterseite der Spinndüse im Wesentlichen senkrechte Trennwand umfassen.

**12.** Vorrichtung nach Anspruch 11, **dadurch gekennzeichnet, dass** die Trennwand mindestens eine Wand (3) umfasst.

**13.** Vorrichtung nach Anspruch 12, **dadurch gekennzeichnet, dass** die Wand (3), vorzugsweise durch Verschrauben, an einer Halterung (23) befestigt ist, die sich in der Nähe der Unterseite der Spinndüse befindet.

**14.** Vorrichtung nach Anspruch 13, **dadurch gekennzeichnet, dass** der Abstand, der die Halterung (23) von der Unterseite (21) der Spinndüse trennt, 0 bis 20 mm beträgt.

**15.** Vorrichtung nach einem der Ansprüche 12 bis 14, **dadurch gekennzeichnet, dass** die Wand (3) mindestens ein vorzugsweise mit Wasser betriebenes Kühlsystem umfasst.

**16.** Vorrichtung nach einem der Ansprüche 12 bis 15, **dadurch gekennzeichnet, dass** die Wand (3) mindestens zwei Platten (31, 32) umfasst, die in Verlängerung voneinander aneinander befestigt sind.

**17.** Vorrichtung nach einem der Ansprüche 12 bis 16, **dadurch gekennzeichnet, dass** sich die Wand (3) mindestens bis zur Auftragseinrichtung (4) erstreckt.

**18.** Vorrichtung nach einem der Ansprüche 12 bis 17, **dadurch gekennzeichnet, dass** mindestens eine Seite der Wand ein Mittel zum Verhindern der Haftung eines oder mehrerer Glasfilamente an dieser Seite umfasst.

**19.** Vorrichtung nach Anspruch 18, **dadurch gekennzeichnet, dass** die Seite mit einer vorteilhafterweise aus Polytetrafluorethylen, PTFE, bestehenden Antihaftbeschichtung überzogen ist.

**20.** Vorrichtung nach Anspruch 18 oder 19, **dadurch gekennzeichnet, dass** ein Wasser- und/oder Luftstrahl im Wesentlichen entlang der Seite strömt.

**21.** Verwendung von mindestens einer Vorrichtung nach einem der Ansprüche 4 bis 20 mit einer direkten Schneideinrichtung unter der Spinndüse.

**22.** Anwendung des Verfahrens nach einem der Ansprüche 1 bis 3 oder der Vorrichtung nach einem der Ansprüche 4 bis 20 zur Herstellung von Endlosglasfäden, insbesondere solchen, deren Durchmesser der Filamente 5 bis 24 μm beträgt, die zur Verstärkung organischer und/oder anorganischer Materialien vorgesehen sind.

**Claims**

**1.** Process for the manufacture of at least one glass strand, in which process N glass filaments are drawn from N orifices opening out from the lower face (21) of the same bushing, the N orifices being distributed in at least two groups (220, 221), **characterised in that** a permanent separation is established between the sheets of filaments exiting from each of the groups (220, 221).

**2.** Process according to claim 1, **characterised in that** the separation is established by means of a screen which is substantially perpendicular to the lower face (21) of the bushing.

**3.** Process according to claim 1 or 2, **characterised in that** the number N is at least 800, and **in that** each separated sheet of filaments comprises at least 400 filaments.

**4.** Device for implementing the process according to any one of claims 1 to 3, comprising a bushing having N orifices opening out from the lower face (21) of that bushing, the N orifices being distributed in at least two groups (220, 221), **characterised in that** it comprises means for establishing a permanent separation between the sheets of filaments exiting from each of the groups (220, 221).

**5.** Device according to claim 4, **characterised in that** it comprises a coating device (4), preferably comprising a single roller, supplied with finishing agent or sizing agent.

6. Device according to claim 5, **characterised in that** it comprises at least two shrouds (43, 44) which are movable relative to one another, advantageously about an axis substantially parallel with the axis of the coating device (4), and which, when in the lowered position, cover the coating device at least partially.

7. Device according to claim 6, **characterised in that** the lower portion of at least one of the shrouds (43, 44) comprises at least one edge (430, 440) which is oblique relative to the axis of the coating device.

8. Device according to any one of claims 4 to 7, **characterised in that** the means for establishing the permanent separation comprise at least one means for blowing air and/or one means for the flow of water.

9. Device according to claim 8, **characterised in that** the means for blowing air and/or the means for the flow of water comprise(s) at least one slot (315) by way of which a continuous curtain of air and/or a continuous curtain of water flow(s) in a direction substantially perpendicular to the lower face (21) of the bushing.

10. Device according to claim 9, **characterised in that** the slot (315) is arranged in the vicinity of the lower face (21) of the bushing.

11. Device according to any one of claims 4 to 10, **characterised in that** the means for establishing the permanent separation comprise at least one screen which is substantially perpendicular to the lower face of the bushing.

12. Device according to claim 11, **characterised in that** the screen comprises at least one wall (3).

13. Device according to claim 12, **characterised in that** the wall (3) is secured, preferably by screwing, to a hanging support (23) arranged in the vicinity of the lower face of the bushing.

14. Device according to claim 13, **characterised in that** the distance separating the hanging support (23) from the lower face (21) of the die is from 0 to 20 mm.

15. Device according to any one of claims 12 to 14, **characterised in that** the wall (3) comprises at least one cooling system, preferably a water cooling system.

16. Device according to any one of claims 12 to 15, **characterised in that** the wall (3) comprises at least two plates (31, 32) which are secured to one another, one as an extension of the other.

17. Device according to any one of claims 12 to 16, **characterised in that** the wall (3) extends at least as far as the coating device (4).

18. Device according to any one of claims 12 to 17, **characterised in that** at least one of the faces of the wall comprises a means for preventing the adhesion of one or more glass filaments to the said face.

19. Device according to claim 18, **characterised in that** the said face is covered with an anti-adhesive coating, advantageously of polytetrafluoroethylene PTFE.

20. Device according to claim 18 or 19, **characterised in that** a jet of water and/or of air flows substantially along the said face.

21. Use of at least one device according to any one of claims 4 to 20 with an installation for cutting directly under the bushing.

22. Application of the process according to any one of claims 1 to 3, or of the device according to any one of claims 4 to 20, to the manufacture of continuous glass threads that are to reinforce organic and/or inorganic materials, especially strands having a filament diameter of from 5 to 24 $\mu$m.

EP 1 054 842 B1

Fig. 2

Fig. 1

11

Fig. 3

Fig. 4

Fig. 4a

Fig. 6

Fig. 5

Fig. 6a

**Fig. 7**

**Fig. 8**

EP 1 054 842 B1